(19) Europäisches Patentamt
European Patent Office
Office européen des brevets

(11) **EP 2 913 202 A1**

(12) # EUROPEAN PATENT APPLICATION

(43) Date of publication:
**02.09.2015 Bulletin 2015/36**

(51) Int Cl.:
**B60B 37/00** (2006.01)  **B61F 3/00** (2006.01)

(21) Application number: **14156805.5**

(22) Date of filing: **26.02.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Bombardier Transportation GmbH
10785 Berlin (DE)**

(72) Inventor: **Schneider, Richard
8224 Löhningen (CH)**

(74) Representative: **Cohausz & Florack
Patent- & Rechtsanwälte
Partnerschaftsgesellschaft mbB
Bleichstraße 14
40211 Düsseldorf (DE)**

(54) **Method for designing a traction unit for a rail vehicle**

(57)    The present invention relates to a method for designing a traction unit for a rail vehicle, the traction unit (103, 108) comprising at least one wheel unit (105) connected to a drive unit (107) driving the at least one wheel unit (105). The method comprises, in a press fit evaluation step, evaluating a press fit acting between a wheel and a shaft (105.1) of the wheel unit (105) for compliance with at least one press fit integrity criterion, the press fit acting between a first press fit section (105.4) of the wheel (105.2) and a second press fit section (105.5) of the shaft (105.1), an axis of rotation of the shaft (105.1) defining an axial direction of the wheel unit (105) and a torsional direction about the axis of rotation. The press fit evaluation step comprises a press fit modeling part, wherein the press fit is modeled by splitting the second press fit section (105.5) into a plurality of press fit segments (105.6) along the axial direction, linking each of the press fit segments (105.6) to an adjacent press fit segment (105.6) in the torsional direction using a first linking characteristic and in the axial direction using a second linking characteristic, and linking each of the press fit segments (105.6) to an adjacent part of the first press fit section (105.4) of the wheel (105.2) via at least one frictional third linking characteristic. The press fit evaluation step comprises a press fit simulation part, wherein the modeled press fit is subject to at least one predefined load to evaluate compliance of the press fit with the at least one press fit integrity criterion.

Fig. 13

EP 2 913 202 A1

**Description**

Background of the Invention

The present invention relates to a method for designing a traction unit for a rail vehicle, the traction unit comprising at least one wheel unit connected to a drive unit driving the at least one wheel unit. The method comprises, in a press fit evaluation step, evaluating a press fit acting between a wheel and a shaft of the wheel unit for compliance with at least one press fit integrity criterion, the press fit acting between a first press fit section of said wheel and a second press fit section of the shaft, an axis of rotation of the shaft defining an axial direction of the wheel unit and a torsional direction about the axis of rotation. The present invention also relates to a traction unit designed using the above method.

The wheel unit (typically a wheel set) typically is a crucial component in the design of a traction unit for a rail vehicle. Beyond the traction torques that have to be transmitted via the driven wheel unit to transmit the desired traction power from the drive unit to the rail, typically, generally undesired mutual torsional vibrations between the wheels of the wheel set about the axis of rotation of the wheel set lead to high additional loads to the wheel set shaft and the connection, typically a press fit, between the respective wheel and the wheel set shaft.

These additional torsional moments generated as a result of such torsional vibrations, in the past may have obtained such a level that the structural integrity of the wheel set could not be maintained and the wheels executed a rotational slipping motion on the wheel set shaft at the level of the press fit. In the past, extensive measurements under service conditions have been performed to evaluate the load history of these undesired effects. Moreover, the optimization of mechanical component design parameters and controller design parameters was following a more pragmatic than systematic approach. This approach resulted in an extensive, time consuming and expensive process, which still suffers from lacking statistical evidence regarding the assumptions and measurements made.

During design of such a traction unit, for example, the structural integrity of the wheel set shaft and the press fit must be assessed on the basis of a combination of torsional and bending stresses in the wheel set shaft which are decisive for the dimensioning of the components. Component integrity is confirmed if all combined torsional and bending stresses are below a given integrity threshold.

With conventional design approaches, basically four different methods which may be classified in two groups are acknowledged for proving the structural integrity of these components. The first group is the so-called fatigue limit assessment, wherein it is assessed if the equivalent stress obtained from certain load assumptions remains below an allowable fatigue limit.

Here, for example, in so-called a maximum bending and torsional stress scenario, a maximum bending stress (typically taken from a predetermined norm such as e.g. EN 13104) and a maximum torsional stress from a prototype testing campaign are used to calculate a resulting equivalent stress which is then evaluated for respecting an allowable stress limit (typically also taken from the respective norm, i.e. for example from EN 13104). However, this scenario is very conservative, such that it is less favorable from an economic point of view.

As a further example, in two so-called realistic bending and torsional stress scenarios (differing in the extent of the prototype testing campaign), a bending stress acting during torsional oscillation and a torsional stress resulting from torsional oscillation are used to calculate a resulting equivalent stress which is then evaluated for respecting an allowable stress limit (typically also taken from the respective norm, i.e. for example from EN 13104). These scenarios, while being less conservative, require a fairly large amount of prototype testing in order to gain statistical significance of the testing campaign.

The second assessment group is the so-called fatigue damage assessment, wherein the fatigue damage is assessed based on service test stress measurements. In this scenario, a damage equivalent bending stress as well as the damage equivalent torsional stress is calculated from the results of prototype tests in order to obtain the resulting total utilization of the respective component. Again, this scenario is extremely extensive, expensive and time consuming, since it also requires extensive prototype testing in order to gain sufficient statistical significance of the testing campaign.

Brief Description of the Invention

The object for the present invention was therefore to provide a method of the type mentioned initially, which does not or at least to a lesser degree have the disadvantages mentioned above and which, in particular, in a simple and reliable manner allows a more systematic assessment of the safety critical components of the traction unit, in particular, the derailment safety relevant press fit between the wheel and the shaft of the wheel unit, in particular under torsional vibrations, and which further allows a reliable load case definition, a reduction of track testing, and simplifies the certification process of the traction unit.

The present invention solves this problem on the basis of a method according to the preamble of claim 1 by means of the features indicated in the characterizing part of claim 1.

The present invention is based on the technical teaching that, in a simple and reliable manner, a more systematic assessment of the safety critical components of the traction unit, in particular, the derailment safety relevant press fit between the wheel and the shaft of the wheel unit, in particular under torsional vibrations, a reliable load case definition, a reduction of track testing and simplification of the certification process of the traction unit may be achieved if the press fit is simulated using a press fit model having a comparatively coarse segmentation of the shaft part and using a frictional linking characteristic to the wheel. Such a press fit model, in a simple manner allows determining the onset of circumferential micro-motion at the torque introduction side of the shaft as well as the axial shift motion under combined axial and torsional load. In particular, the model allows determining the threshold torque which initiates such frictional micro-motion.

In the past, such an evaluation of the press fit by prototype testing was economically virtually impossible due to the complexity of the system and the almost inevitable errors introduced by any measurement system. Hence, typically, rather conservative assumptions were made for the press fit integrity evaluation, which greatly increased the requirements and expense for such a press fit. Contrary to that, the above press fit model now allows obtaining more realistic results suited to the real mechanical conditions.

Hence, according to one aspect, the present invention relates to a method for designing a traction unit for a rail vehicle, the traction unit comprising at least one wheel unit connected to a drive unit driving the at least one wheel unit. The method comprises, in a press fit evaluation step, evaluating a press fit acting between a wheel and a shaft of the wheel unit for compliance with at least one press fit integrity criterion, the press fit acting between a first press fit section of the wheel and a second press fit section of the shaft, an axis of rotation of the shaft defining an axial direction of the wheel unit and a torsional direction about the axis of rotation. The press fit evaluation step comprises a press fit modeling part, wherein the press fit is modeled by splitting the second press fit section into a plurality of press fit segments along the axial direction, linking each of the press fit segments to an adjacent press fit segment in the torsional direction using a first linking characteristic and in the axial direction using a second linking characteristic, and linking each of the press fit segments to an adjacent part of the first press fit section of the wheel via at least one frictional third linking characteristic. The press fit evaluation step further comprises a press fit simulation part, wherein the modeled press fit is subject to at least one predefined load to evaluate compliance of the press fit with the at least one press fit integrity criterion.

It will be appreciated that the above press fit model is particularly suited for the evaluation of the properties of a press fit under high dynamic lead, i.e., typically, under alternating axial and/or circumferential loads acting on the press fit. The above press fit model, nonetheless due to the (comparatively coarse) segmentation of the shaft part and its frictional third linking characteristic to the wheel, in particular, allows determining the onset of circumferential micro-motion at the torque introduction side of the shaft part as well as the axial shift motion under combined axial and torsional lead. In particular, the model allows determining the threshold torque which initiates such frictional micro-motion.

The knowledge of these values is important for the dimensioning of the mechanical components participating in the press fit (i.e. typically the mating sections of the wheel and the shaft) and/or the structural integrity proof of the entire traction unit, in particular, the combination of the mechanical system and the relevant controlled part.

In the past, such an evaluation of the press fit by prototype testing was economical virtually impossible due to the complexity of the system and the almost inevitable errors introduced by any measurement system. Hence, typically, rather conservative assumptions were made for the press fit integrity evaluation, which greatly increased the requirements and expense for such a press fit. Contrary to that, the above press fit model now allows obtaining more realistic results suited to the real mechanical conditions.

Preferably, the first linking characteristic is a spring and damper connection characteristic. In addition or as an alternative, the second linking characteristic preferably is a spring and damper connection characteristic or a rigid connection characteristic.

It will be appreciated that basically any suitable friction model characteristic may be used for the third linking characteristic, which provides proper representation of the frictional micro-motion between the wheel and the shaft. Preferably, the third linking characteristic is a characteristic modeling a stick-slip behavior, such as, preferably, a Lund-Grenoble friction model characteristic.

It will be further appreciated that the third linking characteristic is preferably used to link each of the press fit segments to the adjacent part of the first press fit section of the wheel press in the torsional direction and in the axial direction. With certain embodiments however, different frictional third linking characteristics may be used in the torsional direction and in the axial direction.

It will be further appreciated that, basically, any desired comparatively coarse and macroscopic (compared to known finite element methods) axial segmentation of the shaft part may be used. Preferably, the plurality of press fit segments is formed by 5 to 20 press fit segments, preferably 8 to 15 press fit segments, more preferably 10 to 12 press fit segments. Such segmentation allows keeping the computational effort low while providing proper press fit behavior assessment.

Preferably, in the press fit simulation part, the modeled press fit is subject to at least one predefined quasi static load, in particular, to a predefined quasi static load collective, and/or to at least one dynamic load, in particular to a predefined dynamic load collective. In addition or as an alternative, in the press fit simulation part, the modeled press fit is subject to at least one axial load acting along the axial direction. Furthermore, in addition or as an alternative, in the press fit simulation part, the modeled press fit is subject to at least one torsional load acting along the torsional direction; the torsional load, in particular, comprising a torsional vibration component representative of a torsional vibration between two wheels of the wheel unit about the axis of rotation; the torsional load, in particular, having a frequency of 25 Hz to 150 Hz, preferably 30 Hz to 120 Hz, more preferably 35 Hz to 95 Hz. It will be appreciated that any of these alternatives provides at least close to reality simulation results.

The present invention is further based on the technical teaching that, in a simple and reliable manner, a more systematic assessment of the critical maximum loads to be expected, a reliable load case definition, a significant reduction of on track testing and a simplified certification process of the traction unit may be achieved if, instead of the known extensive testing of prototype components to determine one or more load values to be expected during operation of the traction unit, the at least one load value is defined using a set of real operation adhesion characteristics representative of real operation slip dependent wheel to rail adhesion and having been previously obtained from real operation data, in particular, real service operation data, of at least one reference rail vehicle.

One of the advantages of such a solution is that such real operation adhesion characteristics may themselves already provide a sufficiency broad data basis having sufficient statistical significance. Hence, any calculations made on the basis of these real operation adhesion characteristics are sufficiently reliable from a statistical point of view which, in turn, allows avoiding the well-known extensive testing of prototypes (which is necessary in conventional design processes to obtain statistically sufficiently sound data). Eventually prototype testing may thus be reduced to a minirnum. For example, prototype testing may only be necessary to verify congruence of mechanical properties and/or of controller properties and/or of individual functions of these components or combined functions of the system (including mechanical parts and controller parts, for example) between the real traction unit and its simulation used in the evaluation.

It will be appreciated that prototype testing may be done using any kind of suitable prototype or prototype components. Typically, prototype testing is done with so-called type testing vehicles, i.e. one or more of the vehicles actually to be delivered to and used in normal real service operation by a customer of the manufacturer of the vehicles.

With the present invention, preferably using real service operation data collected by one or more reference vehicles, it is in particular possible to obtain a sufficiently large, statistically significant data basis of adhesion characteristics data which allows sufficiently precise prediction of the adhesion characteristics on a defined track for a vehicle with a defined service operation profile under arbitrary defined environmental conditions. In particular, the adhesion characteristics data may be logically associated with track location information at a sufficiently fine resolution.

It will be appreciated that the adhesion characteristics data basis does not necessarily have to be established for the specific track the vehicle to be designed will be used on. Rather it may be sufficient but the adhesion characteristics data basis covers a sufficiently large amount of representative reference tracks covering all potentially relevant track conditions.

It will be further appreciated that the adhesion characteristics data basis may be established using specific reference vehicle having specific data collecting means for collecting appropriate service operation data. However, preferably, the data collecting means available in conventional rail vehicles is used for collecting such appropriate service operation data. By this means, within a comparatively short delay a sufficiently large, statistically significant data basis may be obtained.

Hence according to a first aspect, the present invention relates to a method for designing a traction unit for a rail vehicle, the traction unit comprising at least one wheel unit connected to a drive unit driving the at least one wheel unit and a controller unit controlling the drive unit. The method comprises, in a mechanical design step, defining at least one mechanical design parameter of the traction unit as a function of at least one predefined performance parameter of the rail vehicle. The method further comprises, in a controller design step, defining at least one controller design parameter of the traction unit as a function of at least one predefined performance parameter of the rail vehicle and/or as a function of at least one mechanical design parameter of the traction unit. Furthermore, the method comprises, in an evaluation step, defining at least one load value acting on the traction unit incorporating the at least one mechanical design parameter defined in the mechanical design step and incorporating the at least one controller design parameter defined in the controller design step, and evaluating compliance of the traction unit with at least one structural integrity criterion predefined for the rail vehicle. The at least one load value is defined using a set of real operation adhesion characteristics, each of the real operation adhesion characteristics being representative of real operation slip dependent wheel to rail adhesion and having been previously obtained from real operation data, in particular, real service operation data, of at least one reference rail vehicle.

It will be appreciated that any desired and suitable real operation data allowing determination of such real operation adhesion characteristics may be used. Preferably, at least one of the real operation adhesion characteristics has been obtained using torsional vibration data as the real operation data, the torsional vibration data having been collected on the at least one reference rail vehicle and being representative of undesired mutual torsional vibration of two wheels of a reference wheel unit of the reference rail vehicle about an axis of rotation of the reference wheel unit.

It will be appreciated that such torsional vibration data lead to specific vibration patterns within the wheel unit which are a function of the actual slip value (and, hence, of the adhesion characteristic) currently prevailing at the wheel to rail contact location. More specifically, the typical build up pattern of the oscillation (with the exponential growth of the amplitude) as well as the limitation of the amplitude of the oscillation (according to the so called Vogel law) allow development of an algorithm for calculating (together with further operating parameters such as the actual drive torque applied to the wheel unit) the actual slip and adhesion value pair for the adhesion characteristic that applies at the time of this specific torsional vibration event.

It will be appreciated in this context that the Vogel law mentioned above defines that the momentary slip value at a wheel during such a torsional vibration event oscillates about the actual slip value corresponding to the traction force or moment, respectively, which would be transmitted at this point of operation in the absence of such a torsional vibration event.

Such actual slip and adhesion value pairs retrieved from torsional vibration data recorded by the reference vehicle(s) may then be used to approximate corresponding adhesion characteristics. It will be appreciated in this context that the parameters of the exponential growth of the amplitude of the torsional vibration signal in particular depends on the inclination of the adhesion characteristics at the respective point of operation, such that this information further simplifies adhesion characteristic approximation and renders it more precise, respectively.

It will be appreciated that the real operation data collected by the reference vehicle(s) preferably is logically associated to further parameters (e.g. environmental parameters and/or operational parameters of the reference vehicle) prevailing at the time of the respective torsional vibration event to allow the setup of a meaningful set of adhesion characteristics which represent a wide range of finely differentiated operation conditions for the traction unit to be designed.

Hence, preferably, at least one environmental information, in particular, a weather condition information and/or an air humidity information and/or an air temperature information, and/or to at least one track condition information and/or to at least one track location information representative of a condition prevailing upon retrieval of the real operation data and/or a time of retrieval information of the real operation data is logically associated to at least one of the real operation adhesion characteristics.

It will be appreciated that the environmental information, such as information on the weather conditions upon retrieval of the real operation data, may be obtained in any suitable way. For example, corresponding sensors may be available at the respective reference vehicle. On the other hand, it may be provided that the reference vehicle only captures time and location of retrieval of the real operation data and, at a later point in time, on the basis of time and location of the retrieval and environmental information, such as weather reports (provided with sufficient temporal and geographic resolution), the corresponding environmental information is logically associated to the real operation data. It will be appreciated that, in this case, statistical treatment of these data may be provided.

It will be appreciated that the real operation data may basically be obtained in any desired and suitable way. Preferably, the real operation data, have been retrieved using at least one sensor unit of the reference vehicle and/or a drive unit driving the reference wheel unit and/or a control unit of the drive unit driving the reference wheel unit.

It will be appreciated that, typically, at least one of the real operation adhesion characteristics has been established using torsional vibration data from a plurality of torsional vibration events having occurred in at least one reference vehicle. Typically and preferably, however, at least one of the real operation adhesion characteristics has been established using torsional vibration data from a plurality of reference vehicles. The use of the data of a plurality of reference vehicles allows easier and more rapid set up, respectively, of a comprehensive and statistically significant data base of adhesion characteristics.

Preferably, the torsional vibration data have been statistically processed to establish the at least one real operation adhesion characteristic. Here, conventional statistical methods may be used to ensure the elimination of measurement errors or the like and, hence, to ensure data hygiene.

It will be appreciated that basically any desired and suitable data obtained during a torsional vibration event may be used for the purpose of the present method. Preferably, however, only the data obtained during the initial part of a torsional vibration event is used, during which no counteraction to the torsional vibration (e.g. by a motor or brake controller etc.) has yet taken place. Such an approach allows using pristine data which are not yet blurred by such counteraction, which greatly facilitates obtaining realistic and representative data.

Hence, preferably, at least one of the real operation adhesion characteristics has been established using a significant fraction of torsional vibration data from a plurality of torsional vibration events having occurred in the at least one reference vehicle, the significant fraction being a fraction of the torsional vibration data collected prior to the onset of an action of a reference vehicle controller counteracting the torsional vibration event.

As mentioned above, the torsional vibration data preferably include further information facilitating setup of the adhesion characteristics. Preferably, the torsional vibration data include information representative of a torque prevailing within the reference wheel unit about the axis of rotation. In this case, the real operation adhesion characteristic may then easily be established using a known relation between the torque and a slip value prevailing at a contact point between one of the wheels of the reference wheel unit and a rail of a track negotiated by the reference vehicle.

With preferred embodiments of the invention, in a simulation part of the evaluation step, a predefined worst-case scenario for the vehicle is used to establish a maximum representative slip and/or a representative slip collective to be expected at the wheel unit during operation of the vehicle, the service profile being representative of service requirements to be fulfilled by the vehicle over its operational lifetime. Such a worst-case scenario, typically a worst adhesion scenario, may be set up on the basis of the requirements of the operator of the vehicle as well as the adhesion characteristics data basis at a very early point in the design process and greatly helps identifying the loads and load collective, respectively, to be expected for the traction unit over its operational lifetime, which may then be used to calculate the corresponding slip values.

The maximum representative slip is preferably used to calculate a maximum torque to be expected at the wheel unit about an axis of rotation of the wheel unit during operation of the rail vehicle. The maximum torque, in turn, is preferably used to evaluate compliance of a press fit between one of the wheels and a shaft of the wheel unit with a predetermined integrity requirement, in particular, with a press fit integrity requirement of the press fit. In addition or as alternative the maximum torque may be used to evaluate compliance of the shaft with a predetermined shaft integrity requirement.

Similarly, the representative slip collective is preferably used to calculate a load collective to be expected at the wheel unit during operation of the rail vehicle. The load collective, in turn, is then preferably used to evaluate, in a integrity requirement part of the evaluation step, compliance of a wheel unit component of the wheel unit with a predetermined integrity requirement. While the wheel unit component preferably is a wheel unit shaft connecting the wheels, the integrity requirement may be a lifetime integrity requirement of the respective wheel unit component.

Preferably, in case of finding noncompliance of the wheel unit component with the predetermined integrity requirement, at least one mechanical design parameter and/or at least one controller design parameter of the traction unit is modified as a function of a result of the integrity requirement part of the evaluation step. In this case, the integrity requirement part of the may then be repeated on the basis of the modified value(s).

Preferably, the maximum representative slip and/or the representative slip collective is established using the set of adhesion characteristics established as outlined above. To realize a highly systematic design approach, preferably, the maximum representative slip and/or the representative slip collective is established using at least one adhesion scenario, the adhesion scenario being representative of a typical course of the wheel to rail adhesion to be expected under a typical worst-case operating scenario of the vehicle. Such typical worst-case operating scenarios may, in particular, fairly easily be defined for the respective vehicle based on a predefined service profile for the vehicle as mentioned above, the service profile typically including information on the tracks to be used by the vehicle, as well as based on the adhesion characteristics data basis obtained for these or at least comparable tracks. Hence, preferably, the at least one adhesion scenario is selected from an adhesion scenario set as a function of the predefined service profile.

Typically, there is only a limited number of typical worst-case operating scenarios the vehicle may experience. Preferably, the at least one adhesion scenario comprises a sudden adhesion drop scenario simulating a steep drop in the wheel to rail adhesion from a maximum adhesion level. In addition or as an alternative, the at least one adhesion scenario may comprise a sudden adhesion rise scenario simulating a steep rise in the wheel to rail adhesion up to a maximum adhesion level.

In addition or as an alternative, the at least one adhesion scenario may comprise an adhesion dent scenario simulating a steep drop in the wheel to rail adhesion from a maximum adhesion level followed by a steep rise in the wheel to rail adhesion up to the maximum adhesion level. Typically, the adhesion drop occurs within an adhesion drop time and the adhesion rise preferably follows after a low adhesion delay, the low adhesion delay preferably being 50% to 500%, more preferably 50% to 400%, more preferably 90% to 300%, of the adhesion drop time.

In addition or as an alternative, the at least one adhesion scenario may comprise a low adhesion scenario simulating a persistent low wheel to rail adhesion at a low adhesion level, the low adhesion level being 20% to 70%, preferably 30% to 60%, more preferably 40% to 60%, of a maximum adhesion level.

It will be appreciated that, in any of these scenarios, the maximum adhesion level preferably is representative of operation on a dry level track. However, any other desired and suitable type of operation may be defined as representing the maximum adhesion level.

As outlined above, the method according to the present invention allows greatly reducing the amount of prototype testing required in the design process. Testing may simply be limited to verify congruence of the simulated properties with the real properties of a prototype. Hence, preferably, in a testing part of the evaluation step, at least one test is performed with at least one prototype component of the traction unit to verify congruence of at least one real property and/or at least one real function of the at least one prototype component with a corresponding simulated property or function of a simulation model of the at least one prototype component used in a simulation part of the evaluation step.

It will be appreciated that this congruence verification testing may be used of any desired and relevant property of the system. Preferably, the real property may be a real mechanical design parameter of the at least one prototype component corresponding to the at least one mechanical design parameter defined in the mechanical design step. In addition or as an alternative, the real property may be a real control design parameter of the at least one prototype component corresponding to the at least one control design parameter defined in the control design step. In addition or as an alternative, the real property may be a real function of the at least one prototype component of the controller unit and/or the drive unit and/or the wheel unit.

To obtain a systematic and streamlined design process, the basic controller setup is defined at an early stage as a function of the initial mechanical design cornerstones (which, in turn, are typically defined as a function of the service profile required for the vehicle).

Hence, preferably, in the mechanical design step, after defining the at least one mechanical design parameter, in particular, after defining a geometry and a material of a wheel unit shaft of the wheel unit and a press fit of at least one of the wheels on the wheel unit shaft, a maximum allowable slip value at a contact point between one of the wheels of the wheel unit and a rail of a track negotiated by the vehicle is calculated using the at least one mechanical design parameter.

Subsequently, in a basic controller setup part of the controller design step, a basic controller setup is defined as a function of the at least one mechanical design parameter defined in the mechanical design step. Then, in a criticality assessment step of the controller design step, using the maximum allowable slip value and the basic controller setup, a usage factor for at least one component of the traction unit, in particular, a usage factor for the wheel unit shaft and/or a usage factor for the press fit, is calculated, and a criticality risk evaluation is performed as a function of the usage factor for the at least one component. Finally, a modification in the at least one mechanical design parameter and/or in the at least one controller design parameter is made as a function of a result of the criticality risk evaluation (i.e. if deemed necessary).

The basic controller setup may be made as a function of arbitrary suitable conditions influencing the requirements for the controller. Preferably, in the basic controller setup part, the basic controlled setup is made as a function of the at least one mechanical design parameter, the basic controller setup being either a low slip controller setup or a high slip controller setup.

With preferred embodiments of the invention, the basic controller setup is made as a function of a location of a torque transmission from the drive unit to the wheel unit, the low slip controller setup, in particular, being selected if the location of torque transmission is substantially central between the wheels. This is due to the fact that such a centrally located torque transmission only has very limited capacity in counteracting torsional vibration events, such that a control scenario is preferably used, where the potential severity of such torsional vibration events is ab initio limited.

In addition or as an alternative, the basic controller setup may be made as a function of a maximum level of the wheel to rail adhesion required for operation of the vehicle, the low slip controller setup, in particular, being selected if the maximum level of the wheel to rail adhesion factor is below 0.15 to 0.30, preferably below 0.15 to 0.35, more preferably below 0.15 to 0.20. Such a comparatively low maximum adhesion factor apparently only requires a lighter, less robust design of the components of the traction unit, which, in turn however, is less resistant to torsional vibration, such that again a control scenario is preferably used, where the potential severity of such torsional vibration events is ab initio limited. On the other hand, such a comparatively low maximum adhesion factor apparently doesn't require a high slip controller setup, such that appropriate operation of the vehicle doesn't require the additional effort of a high slip controller setup.

In addition or as an alternative, the basic controller setup may be made as a function of a traction ratio of traction units of the vehicle with respect to a total number of running gear units of the vehicle, the low slip controller setup, in particular, being selected if the traction ratio is greater than 0.20 to 0.60, preferably greater than 0.25 to 0.55, more preferably greater than 0.30 to 0.50. This is due to the fact that, with such a distributed drive system, the effects of any track conditioning, which may be obtained by a high slip controller setup, are rather limited (compared to a concentrated drive such as in a locomotive where high slip at the leading running gear may achieve track conditioning which is beneficial at a trailing running gear).

In addition or as an alternative, the basic controller setup may be made as a function of braking concept of the traction unit, the low slip controller setup, in particular, being selected if the braking concept comprises braking means engaging a tread of the wheels or a wheel contact surface of a rail of the track negotiated by the vehicle. With such a braking concept acting on the wheel to rail contact surface (and, hence, allowing their conditioning when needed), render obsolete a track conditioning high slip controller setup (with its disadvantages regarding the potential extent of torsional vibration).

It will be appreciated that, in the low slip controller setup, the controller unit is configured to operate in a positive adhesion gradient area of a wheel to rail adhesion characteristic prevailing at the wheel unit, whereas, in the high slip controller setup, the controller unit is configured to operate in a negative adhesion gradient area of a wheel to rail adhesion characteristic prevailing at the wheel unit.

With preferred embodiments of the invention, in the controller design step, the controller unit is configured to detect torsional vibration events at the wheel unit and/or to log torsional vibration events at the wheel unit. In the mechanical design step, after defining the at least one mechanical design parameter, in particular, after defining a geometry and a material of a wheel unit shaft of the wheel unit and a press fit of at least one of the wheels on the wheel unit shaft, a maximum allowable slip value at a contact point between one of the wheels of the wheel unit and a rail of a track negotiated by the vehicle is calculated using the at least one mechanical design parameter. Subsequently, in the controller design step, the controller unit, in the high slip controller setup, is configured to counteract torsional vibration events at the wheel unit implementing a hard intervention regime immediately counteracting torsional vibration events. In addition or as an alternative, the controller unit, in the high slip controller setup, is configured to implement a slip growth limitation.

On the other hand, in the controller design step, the controller unit, in the low slip controller setup, preferably is configured to counteract torsional vibration events at the wheel unit. The controller unit preferably implements a hard intervention regime immediately counteracting torsional vibration events if the maximum allowable slip value is below a critical torsional vibration threshold, while the controller unit preferably implements a soft intervention regime slowly counteracting torsional vibration events if the maximum allowable slip value is in a soft intervention range above the critical torsional vibration threshold. In addition or as alternative, in the low slip controller setup, the controller unit may preferably be configured to implement a slip growth limitation.

The critical torsional vibration threshold preferably is a slip value of 0.25 m/s to 0.30 m/s, preferably of 0.26 m/s to 0.29 m/s, more preferably of 0.27 m/s to 0.28 m/s. The soft intervention range preferably ranges from the critical torsional vibration threshold to a slip value of up to 1.6 m/s, preferably up to 1.5 m/s, more preferably up to 1.4 m/s. By this means, ultimately depending on the damage risk associated to torsional vibration events, an appropriate reaction to torsional vibration events may be achieved.

It will be appreciated that any desired and suitable reaction may be chosen in case noncompliance of the traction unit with the at least one structural integrity criterion is determined in the evaluation step. Preferably, in case of determining noncompliance of the traction unit with the at least one structural integrity criterion in the evaluation step, the mechanical design step and/or the controller design step is repeated followed by repetition of the evaluation step.

In case of determining compliance of the traction unit with the at least one structural integrity criterion in the evaluation step, maintenance and/or service requirements for the traction unit are preferably generated. ;

In addition or as an alternative, in case of determining compliance of the traction unit with the at least one structural integrity criterion in the evaluation step, in a safety demonstration step, at least one hazard analysis is performed for at least one component of the traction unit. This at least one hazard analysis identifies at least one maximum hazard failure mode (among a plurality of potential failure modes of the at least one component of the traction unit), which has a maximum hazard level. Subsequently, a behavior of the at least one component of the traction unit under the maximum hazard failure mode is simulated to obtain a hazard risk level, in particular, a security integrity level (SIL), of the at least one component of the traction unit. In many typical embodiments, the maximum hazard failure mode is an axial shift of one of the wheels on a wheel set shaft of the wheel unit, since such an axial shift typically greatly increases the risk of derailment of the vehicle.

The present invention further relates to a traction unit comprising at least one wheel unit connected to a drive unit driving the at least one wheel unit and a controlled unit controlling the drive unit, the traction unit having been designed using a method according to the invention.

Further preferred embodiments of the invention become apparent from the dependent claims or the following description of preferred embodiments which refers to the attached drawings.

Brief Description of the Drawings

Figure 1    is a schematic sectional view of a preferred embodiment of the vehicle according to the invention (along the line I-I from Figure 3);

Figure 2    is a schematic sectional view of a running gear of the vehicle from Figure 1;

Figure 3    is a diagram of an adhesion characteristic at the wheel to rail contact of the running gear from Figure 2;

Figure 4    is a diagram of a set of adhesion characteristics at the wheel to rail contact of the running gear from Figure 2;

Figure 5    is a diagram illustrating a torsional vibration event at a wheel unit of the running gear from Figure 2;

Figure 6    is a diagram illustrating the specifics of the Vogel law;

Figure 7    is a block diagram of a preferred embodiment of the method for designing a traction unit for the rail vehicle from Figure 1;

Figure 8    is a block diagram of controller unit of the traction unit of the rail vehicle from Figure 1;

Figure 9    is a diagram illustrating an adhesion drop scenario at the wheel to rail contact of the running gear from Figure 2;

Figure 10   is a diagram illustrating an adhesion dent scenario at the wheel to rail contact of the running gear from Figure 2;

Figure 11   is a diagram illustrating a low adhesion scenario at the wheel to rail contact of the running gear from Figure 2;

Figure 12   is a diagram illustrating a slip limitation controller action at the wheel to rail contact of the running gear from Figure 2;

Figure 13   is a schematic sectional view of a part of the running gear from Figure 2.

Figure 14   is a further schematic sectional view of a part of the running gear from Figure 2.

Figure 15   is a diagram illustrating the Lund-Grenoble friction model characteristic used in the method of Figure 7.

Detailed Description of the Invention

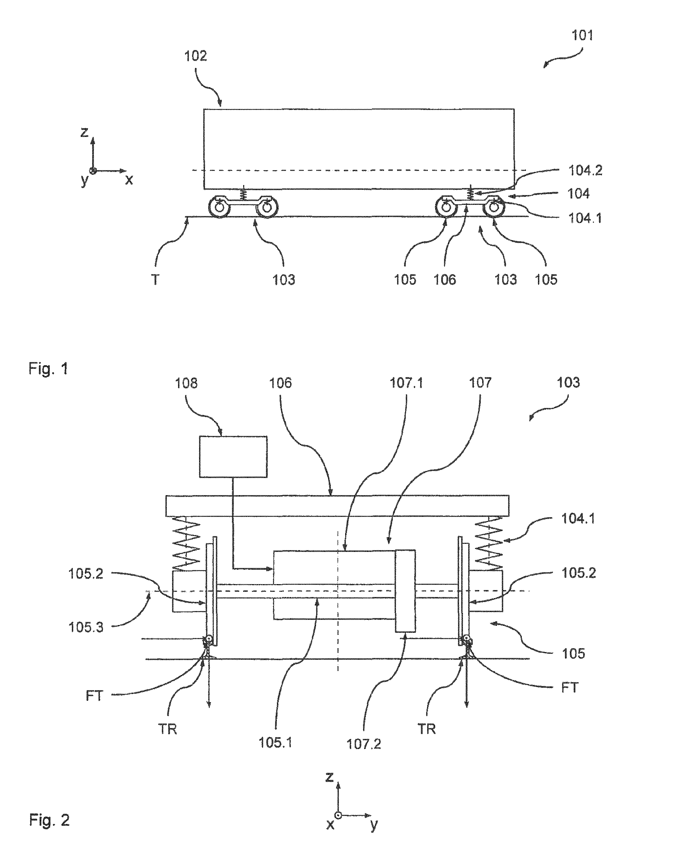

In the following, with reference to Figures 1 to 13, a preferred embodiment of the method for designing a traction unit for a rail vehicle 101 according to the invention will be described. The vehicles 101 may be a vehicle of a train set and, hence, may be coupled to one or more further vehicles (not shown) of the train set. Moreover, all or some of the vehicles of the train set may implement the present invention as described herein.

Figure 1 shows a schematic sectional side view of the vehicle 101. The vehicle 101 comprises a wagon body 102, which in the area of its first end is supported on a running gear in the form of a first bogie 103 by means of a first spring device 104. In the area of its second end, the wagon body 102 is supported by means of a second spring device 104 on a second running gear in the form of a second bogie 103. The bogies 103 are of identical design. Similar applies to the spring devices 104. It is self-evident, however, that the present invention can also be used with other configurations in which other running gear designs are employed.

For ease of understanding of the explanations that follow, in the figures a coordinate system x, y, z (determined by the wheel contact plane of the bogies 104) is indicated, in which the x coordinate denotes the longitudinal direction of the rail vehicle 101, the y coordinate denotes the transverse direction of the rail vehicle 101 and the z coordinate denotes the height direction of the rail vehicle 101.

The bogie 104 comprises two wheel units in the form of wheelsets 105, each of which via the primary suspension 104.1 of the spring device 104 supports a bogie frame 106. The wagon body 102 is supported via a secondary suspension 104.2 on the bogie frame 106. The primary suspension 104.1 and the secondary suspension 104.2 are shown in simplified form in Figure 1 as helical springs. It is self-evident, however, that the primary suspension 104.1 or the secondary suspension 104.2 can be any suitable spring device. In particular, the secondary suspension 104.2 preferably is a sufficiently well known pneumatic suspension or similar.

The bogie 104 is configured as a traction unit with its wheel sets 105 connected to a drive unit 107 driving the wheel set 105 and a controller unit 108 controlling the drive unit 107. The drive unit 107 comprises a motor 107.1 connected to a gear unit in the form of a gearbox 107.2, which transmits the motor torque MT in a conventional manner to the wheel set shaft 105.1 of the wheel set 105. The wheels 105.2 of the wheel set 105 are mounted to the wheel set shaft 105.1 in a press fit connection, such that the traction torque MT is transmitted to the rails TR of the track T resulting in a traction force FT at the wheel to rail contact point.

Transfer of the traction forces FT from the wheels 105.2 to the rails TR requires a relative speed between the wheel 105.2 and the rails TR. In other words, the tangential speed U of the wheel 105.2 at the wheel to rail contact point must be greater than the translational speed V of the wheel 105.2. This relative speed between the wheel 105.2 and the rail TR is called slip speed (or, in some cases hereinafter, simply slip) S = U - V.

The effective traction force FT at the wheel to rail contact point calculates as the product of the contact force FC and the adhesion factor AF at the wheel to rail contact point, i.e. as:

$$FT = AF \cdot FC . \qquad\qquad (1)$$

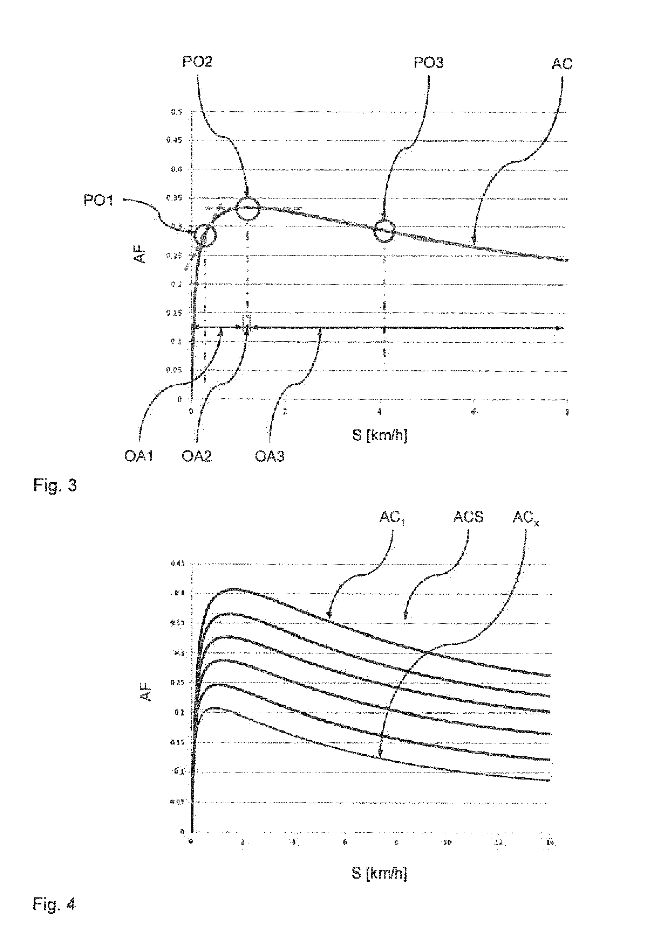

The characteristic relation between this slip S and the adhesion factor AF, hence, the effective traction force FT, the so called adhesion characteristic AC, is shown in Figure 3 and 4. As can be seen from Figure 3, at very low slip speeds S, e.g. in a point of operation PO1, there is a steep gradient in the adhesion characteristic AC, flattening out at a certain level in a point of operation PO2 depending on the adhesion level available between the wheel 105.2 and the rail TR. The adhesion level is defined by the contact conditions between the wheel 105.2 and the rail TR, such as dry contact conditions, wet contact conditions, water or leaves on the track T, etc. Hence, depending on the contact conditions between the wheel 105.2 and the rail TR, there is a set ACS of different adhesion characteristics $AC_1$ to $AC_x$ as it is shown in Figure 4. Generally, at higher slip levels, e.g. in a point of operation PO3, the adhesion drops down with a negative gradient following a logarithmic shape.

The shaft 105.1 connecting the wheels 105.2 basically forms a torsional spring between the two wheels 105.2 with a very low damping ratio. There are a number of different coupling arrangements possible, some where the coupling between the motor 107.1 and the shaft 105.1 is of a hollow shaft type connected to one of the wheels, or so called axle hug or semi suspended drives, where the gearbox is located just beside one wheel 105.2. In special cases, the coupling is allocated just in the middle of the shaft 105.1 through a hollow shaft design. Coupling and gearbox 1057.2 act as a spring and damping system as well, so that the drivetrain is basically a three mass/spring system with all its dynamic characteristics.

The mechanical system of the wheel set 105 has a very low damping ratio and is therefore easily excited and brought into torsional oscillation, a so called torsional vibration TV. The wheels 105.2 are then oscillating against each other about the axis of rotation 105.3 of the wheel set 105 with a frequency between around 40 Hz to 90 Hz, depending on the dimensions and the masses of the wheels 105.2 and the shaft 105.1.

As the wheels 105.2 are exposed to the different adhesion characteristics of the adhesion characteristics set ACS (see Figure 4), this oscillation behaves different, depending on the operating point OP on the respective adhesion characteristic $AC_1$ to $AC_x$. As shown in Figure 3, three basically different operating areas OA1 to OA3 exist. In the area OA1, the gradient is positive, i.e. the slip energy acts as a damper and no torsional oscillation of the wheels 105.2 is possible.

In the area OA2, the gradient is substantially zero. At this point (e.g. in operating point OP2) a torsional oscillation is not yet starting, but such an operating point with maximum adhesion is difficult to maintain with the traction control system. The shaft 105.1 tends to slip out into the area OA3 with its negative gradient (e.g. in operating point OP3). Such a negative gradient of the respective adhesion characteristic $AC_i$ (with i = 1 to x) acts as damper with a negative characteristic, which is equal to an active excitation of any oscillation of the mechanical system.

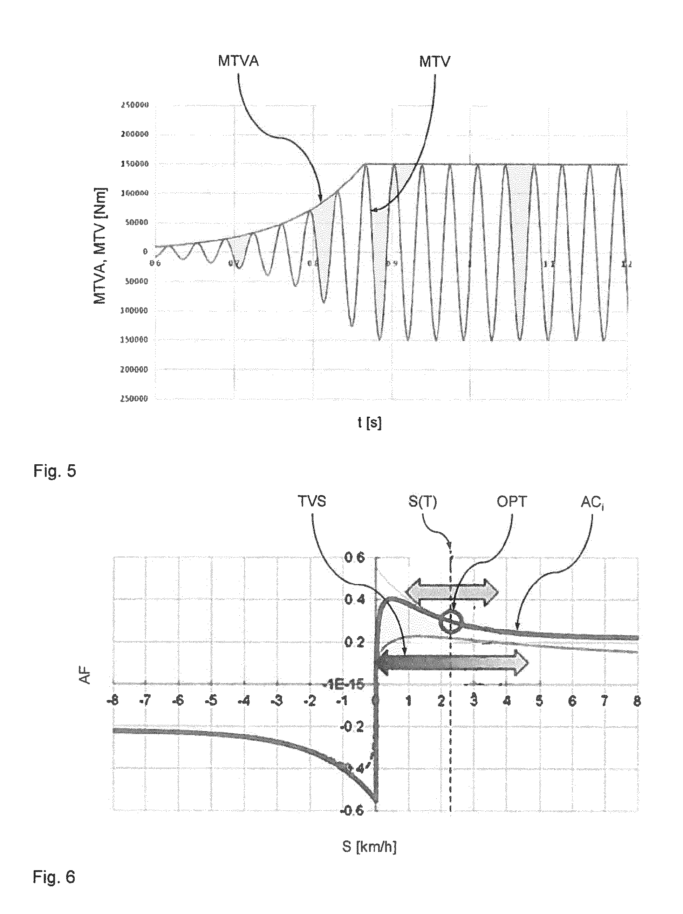

While crossing the operating point PO2 on the adhesion characteristic $AC_i$, the adhesion force changes, and, with an asymmetric mechanical system as shown in Figure 2, an initiation of the torsional oscillation TV is given by the nature of the system. The torsional oscillation or torsional vibration TV of the wheels 105.2 then starts and propagates as shown in Figure 5.

As can be seen from Figure 5, there is an exponential growth (over time t) of the amplitude MTVA of the oscillating torque MTV acting within the shaft 105.1 as a result of the torsional vibration TV. This growth goes up to a certain level, where the amplitude MTVA is cut off. The exponential growth of the amplitude MTVA depends on the inertia of the wheels 105.2 and the motor 107.1 and the stiffness of the shaft 105.1, as well as of the type of arrangement, in particular, at which position on the shaft 105.1 the torque of the motor 107.1 is introduced.

The phenomenon of the cut off of the oscillation amplitude is given by the so called Vogel law, defining that the amplitude MTVA of a torsional oscillation TV is proportional to the slip value S(T) of the traction as shown in Figure 6. The contact point of the wheel 105.2 on the rail TR oscillates around the slip value S(T) of the theoretical traction (theoretical operating point OPT). In other words, as indicated by the arrow TVS in Figure 6, the momentary slip value S at the wheel 105.2 during such a torsional vibration event TVE oscillates about the actual slip value theoretically corresponding to the traction force FT which would be transmitted at this operation point OPT in the absence of such a torsional vibration event TVE.

At the point of zero slip, the adhesion characteristic changes dramatically and the torsional oscillation is heavily disturbed, so that it can not propagate any further. The actual theoretical slip S(T) applied on the wheel 105.2 at the time of a torsional vibration event TVE therefore defines the maximum possible torque $MTV_{max}$ that can develop.

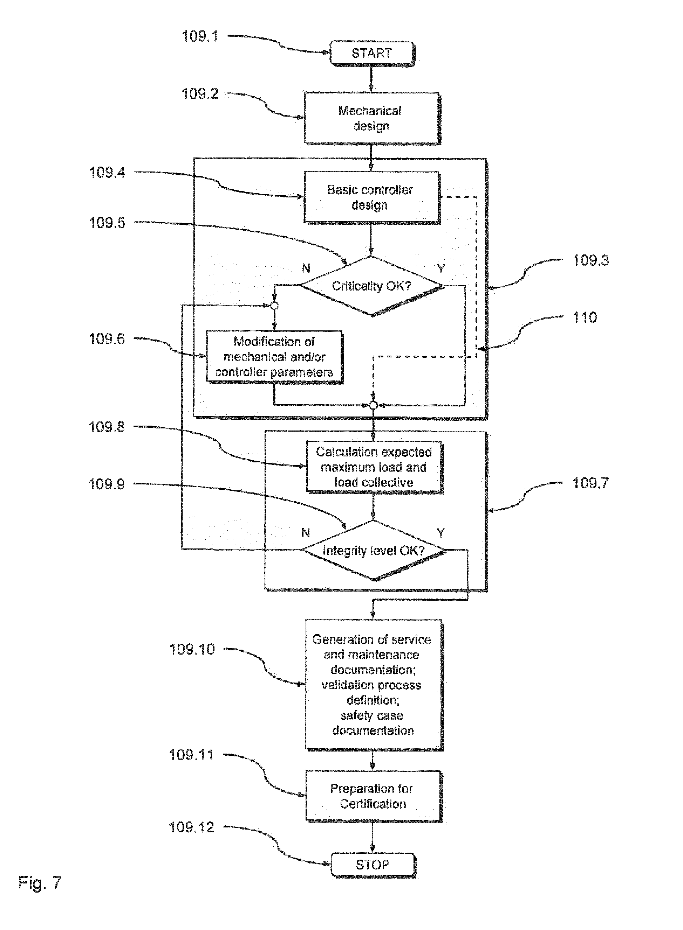

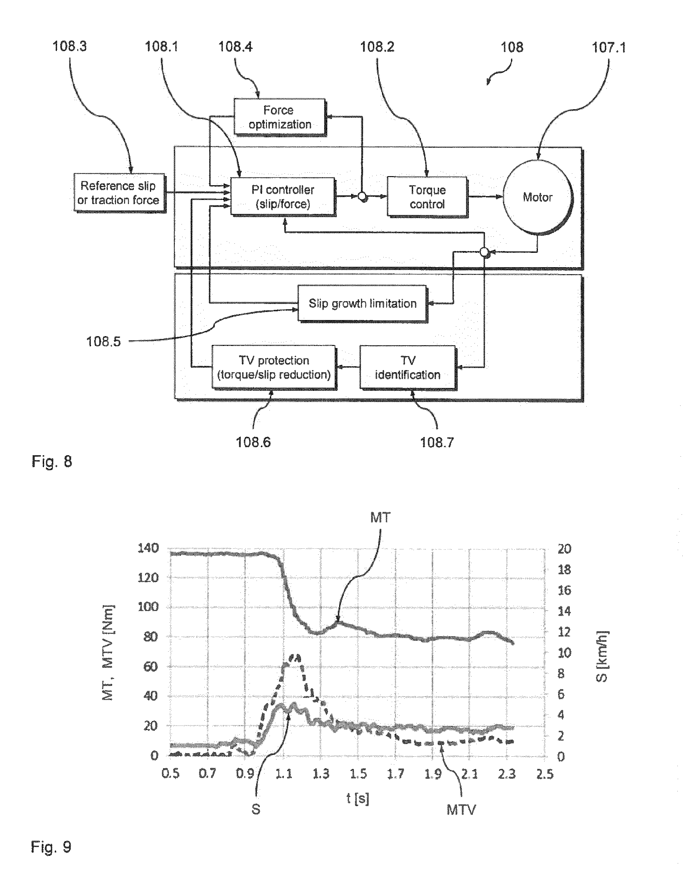

The traction unit in the form of bogie 103 needs to be controlled by an electronic controller system 108, which together with the mechanical drive system is designed using a method for designing a traction unit according to the invention as will now be described below. A block diagram of this design method is shown in Figure 7, while a generic controller architecture for such an electronic controller system 108 is shown in Figure 8.

The core of the slip or force control of the controller 108, in the present example, is the PI controller 108.1, which provides a target torque TT to the torque control 108.2 or motor converter, which controls the motor 107.1 itself. The PI controller 108.1 receives a target slip TS or target force TFT from the control panel 108.3 of the vehicle 101 (operated by the driver of the vehicle 101). Depending on the controller type, different modules are implemented as feedback loops, such as force optimization 108.4, slip growth limitation 108.5 or torsional vibration control 108.6.

The force optimization module 108.4 is preferably implemented to basically find the optimum traction force FT at the peak of the adhesion characteristic $AC_i$. The slip growth limitation 108.5 is preferably implemented to avoid or reduce a heavy slip out in case the adhesion peak of the adhesion characteristic $AC_i$ is exceeded. For the case that torsional vibrations TV may develop, a recognition system 108.7 is preferably implemented to identify such torsional vibrations TV and to limit the torque and/or slip within an appropriate delay via the torsional vibration control 108.6 to stop the torsional vibration TV within an appropriate delay.

The controller 108 has to cope with a virtually unlimited amount of different adhesion conditions in service. However, independent of the amount of adhesion characteristic variations, three specific worst-case adhesion scenarios AS1 to AS3, as they are show in Figure 9 to 11, can be defined on the basis of the set of adhesion characteristics ACS to understand the basic behavior of the traction system. Each of Figure 9 to 11 reflects the course of the traction moment MT, the amplitude MTVA and the slip S over time t.

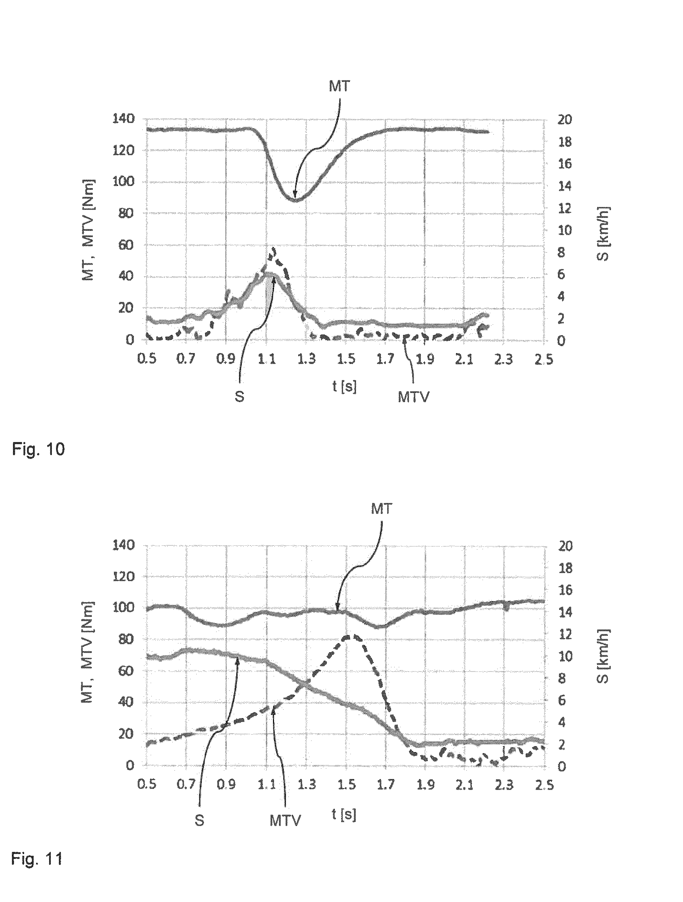

The scenario AS1 shown in Figure 9 is a sudden adhesion drop, which may happen while running into a tunnel or leaving it. The scenario to AS2 shown in Figure 10 is an adhesion dent, which may happen while running underneath a bridge or the like. Finally, the scenario AS3 shown in Figure 11 represents a low adhesion situation as it may occur e.g. under rainy conditions. Together with the continuously changing wheel to rail contact area (due to the changing wheel and rail profile combination as well as the relative motion between the wheel 105.2 and the rail TR) it is apparent that the initiation and propagation of torsional vibration TV is subject to extreme variations in reality.

All this together makes it impossible to predict the maximum expected torque $T_{max}$ within the wheel set 105 (even with the best possible models), if the relevant boundary conditions are not well defined. The present invention solves this problem by applying a systematic approach with clearly defined boundary conditions based on service data previously captured in one or more reference vehicles as will now be explained in greater detail with reference to Figure 7.

The process generally starts in a step 109.1 with the contract and technical specification for the vehicle 101. The vehicle, concept and required performance characteristics which are decisive for the mechanical design of the running gear 103 and the controller design of controlled 108, in particular, the architecture of controller 108, are clearly defined in this step 109.1.

In a mechanical design step 109.2, the conception design of the bogie 103 and the drive system 107 resulting from the predefined performance parameters of the rail vehicle 101 will lead, among others, to an initial dimensioning of the shaft 105.1 and the press fit between the shaft 105.1 and the respective wheel 105.2. This definition of the mechanical design parameters of the traction unit 103 allows determination of the allowable slip $S_{max}$ as will be explained in greater detail below.

Subsequently, in a basic controller setup part 109.4 of the controller design step 109.3, with the mechanical concept of the vehicle 101 and the bogie 103 (i.e. with the mechanical design parameter(s) defined in the mechanical design step 109.2) as well as with the traction performance requirements of the vehicle 101, a decision is made regarding the basic controller strategy.

More precisely, as will be explained in greater detail below, a decision is made, whether a high slip controller architecture or a low slip controller architecture shall be used for controller 108. It will be appreciated that the low slip strategy is generally preferred for most electric multiple units (EMU), while the high slip strategy is typically required for locomotives with disc brakes as will be explained in greater detail below.

With this detailed information on the mechanical design and the controller design, in a criticality assessment step 109.5 of the controller design step 109.3, a criticality assessment is performed and the controller modules and controller parameters of controller 108 are defined. Here, using the maximum allowable slip value $S_{max}$ and the basic controller setup of controller 108, a usage factor UFS for the wheel set shaft 105.1 and a usage factor UFP for the press fit between shaft 105.1 and wheels 105.2 is calculated. Each usage factor UFS, UFP represents the ratio of the actual loading with respect to the maximum allowable loading of the respective component.

Subsequently, a criticality risk evaluation is performed as a function of the usage factors UFS, UFP calculated in step 109.5. Hence, in step 109.5, recommendations for the design and setup of controller 108 as well as its controller parameters can be defined. Finally, in a step 109.6, a modification in at least one of the initial mechanical design parameters and/or in at least one of the initial controller design parameters is made as a function of a result of the criticality risk evaluation (i.e. if deemed necessary in step 109.5).

In a simulation step 109.8 of an evaluation step 109.7, a predefined service profile SP for the vehicle 101 is then used to establish a maximum representative slip $S_{r,max}$ and a representative slip collective SC to be expected at the wheel set 105 during operation of the vehicle 101.

The maximum representative slip $S_{r,max}$ and a representative slip collective SC are defined using the service profile SP and a set of real operation adhesion characteristics ACS. Each of the real operation adhesion characteristics

$AC_i$ of the set ACS is representative of real operation slip dependent wheel to rail adhesion.

The service profile SP is representative of service requirements to be fulfilled by the vehicle 101 over its operational lifetime. Such a service profile SP, typically, is already set up in the initial step 109.1 on the basis of the requirements of the operator of the vehicle 101, hence at a very early point in the design process, and greatly helps identifying the loads and the load collective, respectively, to be expected for the traction unit 103 over its operational lifetime.

Hence, using the service profile SP, the appropriate adhesion characteristics $AC_i$ may be selected from the set ACS to simulate, in a comparatively simple and advantageous manner, the real maximum representative slip $S_{r,max}$ and the real representative slip collective SC to be expected at the simulated wheel set 105.

Each of the real operation adhesion characteristics $AC_i$ has been previously obtained from real service operation data of one or more reference rail vehicles using a preferred embodiment of the method for establishing a set of adhesion characteristics according to the invention.

In the present example, the real operation adhesion characteristics $AC_i$ of the set ACS have been obtained using torsional vibration data TVD as the real operation data, the torsional vibration data TVD having been collected on the respective reference rail vehicle during torsional vibration events TVE at one or more wheel sets of the respective reference rail vehicle as explained above.

The maximum representative slip $S_{r,max}$ is used in the present example to calculate a maximum torque $T_{max}$ (about the wheel set axis 105.3) to be expected during operation of the rail vehicle 101. The maximum torque $T_{max}$, in a integrity requirement evaluation step 109.9 of the evaluation step 109.7, is used to evaluate compliance of the press fit between the respective wheel 105.2 and the shaft 105.1 with a predetermined integrity requirement, in particular, with a press fit integrity requirement defined for the press fit.

Similarly, the representative slip collective SC is used in the present example to calculate a load collective LC to be expected at the wheel set during operation of the rail vehicle 101. The load collective LC, in the integrity requirement evaluation step 109.9, is used to evaluate, compliance of the wheel set shaft 105.1 with a predetermined integrity requirement. In the present example, the integrity requirement is a lifetime integrity requirement defined for the of the wheel set shaft 105.1.

Preferably, in case of finding noncompliance of the shaft 105.1 and the press fit with the predetermined integrity requirement, at least one mechanical design parameter and/or at least one controller design parameter is modified as a function of a result of the integrity requirement evaluation step 109.9. This is done, in the present example, by jumping back to step 109.6, such that, ultimately, the evaluation step 109.7 is repeated on the basis of the modified mechanical design parameter and/or controller design parameter value(s).

In case of finding compliance of the shaft 105.1 and the press fit (as well as of eventual other components) with the respective predetermined integrity requirement, in a step 109.10, the final design and calculations for the mechanical components of the bogie 103 and the controller 108 follow together with the generation of the respective documentation for the subsequent certification process performed in step 109.11.

The final mechanical design and the final controller design further allows defining service and maintenance instructions for the vehicle and also the calculation of the hazard scenarios in case of failure of components or false behavior of the controller systems, as it is also done in step 109.10. Together with the safety case documentation, the safety integrity level (SIL) is defined in step 109.10. Finally, in the validation activities will be derived from all the analysis in step 109.10.

The process is now conclusive and the preparation for the certification of the vehicle 101 through the authorities follows in a step 109.11 before terminating the process in a step 109.12.

Will be appreciated that, with other embodiments of the invention, the criticality assessment step 109.5 may be omitted as it is indicated in Figure 7 by the dashed contour 110. In this case, after the basic controller design step 109.4 is completed, the method immediately jumps to the simulation step 109.8.

The above process includes a plurality of sub-processes which will now be explained in greater detail.

As mentioned above, the design of the bogie 103, the drive unit 107 and the wheelset 105 is driven by the train concept and the performance requirements defined by the operator of the vehicle 101. Generally, this is a periodic process, following different loops from the conceptual design up to the final design review. However, the general layout of these components is basically fixed in an early stage of a contract, typically in step 109.1, so that the required performance of the shaft 105.1 and press fit of the wheels 105.2 on the shaft 105.1 can be calculated at this early stage.

The calculation of the press fit performance and the shaft performance allows the calculation of the allowable torques $MTV_{max}$ caused by torsional vibrations events for the shaft 105.1 and press fit of the wheels 105.2 on the shaft 105.1. In the mechanical design step 109.2, these allowable torques $MTV_{max}$ can then be converted into allowable slip values $S_{max}$ according to the Vogel Law as outlined above (see Figure 6) and the previously determined mechanical design parameters of the wheel set 105 and the drive unit 107.

The basic controller design of controller 108, i.e. the control strategy definition in step 109.3 considers two completely different control strategies, namely a low slip strategy and a high slip strategy as explained above. Especially with locomotives a high traction force FT is required, such that in cases, where only disc brakes are implemented in the bogie 103, the wheel tread roughness is so low that, at low adhesion factors AF, the traction force FT is significantly reduced.

To improve the traction performance under low adhesion conditions, the wheel sets 105 of the leading bogie 103 are run with a high slip value S in order to condition the rails TR, providing a higher adhesion level for the trailing bogie 103. This strategy is called a high slip strategy.

On the other hand, with EMUs with distributed traction systems, this rail conditioning process does not provide a significant improvement in the traction performance and, therefore, running at high slip is not required. Hence, typically, a low slip control strategy is used. In case of such a low slip control strategy, the slip S is limited to such a level, that the torsional vibrations TV are either eliminated or the torques are not structurally relevant for the wheel set 105. Both strategies can be implemented with the same controller architecture of controller 108 having different controller parameters. As an alternative, two different controller architectures may be used for controller 108.

Based on the train concept, the design and performance characteristics defined in initial step 109.1, the following four criteria are decisive for the decision on the control strategy.

A first criterion is the lateral position (i.e. the position along the transverse direction y) of the introduction of the drive torque MT into the shaft 105.1, i.e. typically the position of the gearbox 107.2 on the shaft 105.1. A laterally central position of the gearbox 107.2 or torque application, respectively, does not allow identification and counteraction of torsional vibration events TVE via the drive system 107. A low slip strategy is therefore required in any of these cases.

With an eccentric arrangement of the gearbox 107.2 or torque application, respectively, both strategies are generally possible, such that the following further criteria are respected in the decision.

A second criterion is the nominal adhesion (i.e. the required adhesion factor AF to transfer the maximum traction force $FT_{max}$ required according to the operator's specifications). If the required adhesion factor AF is lower than 0.20, a low slip strategy is preferably followed. This is due to the fact that, at such low adhesion levels, a lighter, less robust design of the components of the wheel set 105 is required, which, in turn however, is less resistant to torsional vibration TV, such that, preferably, a control scenario is used, where the potential severity of such torsional vibration events TVE is ab initio limited.

A third criterion is the traction ratio of traction units 103 within the individual vehicle or the train set (if more vehicles 101 are combined to form such a train set) with respect to a total number of running gear units of the individual vehicle or the entire train set. If, in the present example, the traction ratio (i.e. the relation between driven wheel sets 105 and total number of wheel sets) is higher than 30% to 50% (as it is the case, for example, in many EMUs) a low slip strategy will be followed. At lower traction ratio values, as it is usually the case with locomotive driven train sets, a high slip strategy will be followed.

Finally, a fourth criterion is the braking concept of the traction unit. If the bogie 103 is equipped with tread or block brakes, the wheels 105.2 are continuously conditioned to have a higher surface roughness. Hence, a low slip strategy will be followed in the present example. If exclusively disc brakes are implemented, such surface conditioning doesn't take place and, hence, a high slip strategy will be followed in the present example.

If a low slip controller strategy is selected in the basic controller design step 109.4, the following considerations apply for the detailed design of controller 108 in the present example.

If the peak value of the relevant adhesion characteristics $AC_i$ is at a relatively high slip value S, which is higher than the allowable slip $S_{max}$, operating conditions in the positive gradient area (OA1 in Figure 3) will exist and no torsional vibrations TV will be generated at all during real operation of vehicle 101. Hence, in these cases, the controller 108 only has to ensure that the maximum allowable slip $S_{max}$ is not exceeded.

If the peak value of the relevant adhesion characteristics $AC_i$ is at a very low slip value, which is lower than the allowable slip $S_{max}$, operating conditions in the negative gradient area (OA3 in Figure 3) will exist and torsional vibrations TV will be generated during real operation of vehicle 101. In this case, it is important to implement an effective slip growth limitation module 108.5 that limits the slip out of the wheel set 105.

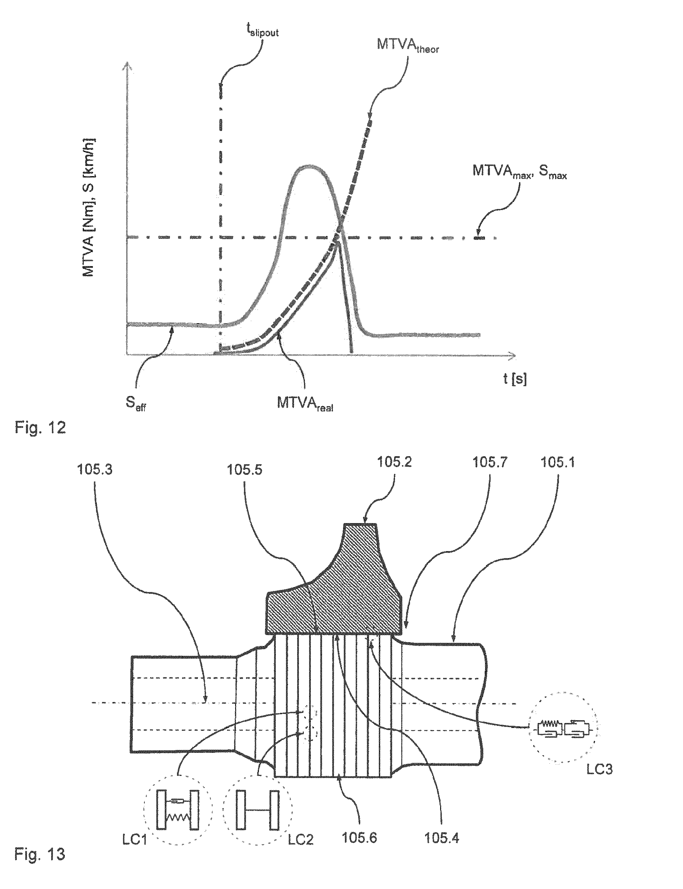

In case of a slip out at a point in time $t_{slipout}$, the torsional vibration TVE can be initiated immediately. Hence, in the present example, the controller 108 shall reduce the effective slip $S_{eff}$ fast enough that it falls below the maximum allowable slip threshold $S_{max}$ before the amplitude $MTVA_{real}$ of the torsional vibration torque MTV generated exceeds the allowable torque $MTVA_{max}$, as it is schematically shown in Figure 12 (also showing the theoretical course of the amplitude $MTVA_{theor}$ in the absence of such a counteraction).

In case, the allowable slip stays between around 1 km/h to 5 km/h, the shaft 105.1 can resist the torques MTV induced by the torsional vibrations TV without damage. However, as it is not recommended to run for a long time with such torsional vibrations TV, in the present example, the torsional vibrations TV shall be identified and the slip S shall be smoothly reduced in order to stop the torsional vibrations TV, preferably after a few seconds. In case, the allowable slip $S_{max}$ is very low, e.g. lower than around 1 km/h, the torques MTV generated by torsional vibrations TV could damage the shaft 105.1 and the press fit with the wheel 105.2. Therefore, a hard intervention from the controller 108 is provided in the present example to stop any torsional vibration TV as soon as possible, preferably immediately.

In either case, the functionality of the controlled 108 shall be supervised in the present example. This will be done by the torsional vibration identification component 108.7. If the amplitude MTV of the torque MTV exceeds the predefined limit, the supervision component 108.7 will generate alarms which allow a respective action at the required safety level.

If a high slip controlled strategy is selected in the basic controller design step 109.4, the following considerations apply for the detailed design of controller 108 in the present example.

With this strategy, the system will run by definition in the area of the negative slope of the adhesion characteristics (OA3 in Figure 3). Hence, the torques MTV generated by the torsional vibrations TV will become critical for the integrity of the shaft 105.1 and the press fit with the wheel 105.2. It is therefore important to implement an effective slip growth limitation in component 108.5 together with a torsional vibration control in components 108.6 and 108.7 with hard intervention features such as torque and slip reduction. The evaluation of the maximum slip $S_{max}$ and the respective torque $MTVA_{max}$ is done in a similar way as for the low slip strategy shown in Figure 12.

Also in this case, the functionality of the controlled 108 shall be supervised in the present example. This will be done by the torsional vibration identification component 108.7. If the amplitude MTVA of the torque MTV exceeds the predefined limit, the supervision component 108.7 will generate alarms which allow a respective action at the required safety level.

For the calculation of the respective torques MTV as it is done in the part 109.8 of evaluation step 109.7, detailed and complex simulation models are used with a realistic representation of the mechanical system together with the complete architecture of controller 108.

As the adhesion conditions can vary to a virtually unlimited extent, the specific adhesion scenarios AS1 to AS3 as described above in the context of Figure 9 to 11 are used to allow systematic assessment of the behaviour of the system. In the present example, the detailed behaviour of the complete system (mechanical and controlled components) are calculated for each scenario AS1 to AS3. As a special case, the run into an adhesion raise as existing in the adhesion dent scenario AS2 will also be calculated. These scenarios allow for a reliable evaluation of the behaviour of controller 108 and the development of the torsional vibration torque MTV.

With this systematic approach, the maximum possible torque amplitudes $MTVA_{max}$ can be defined as well as the expected torques MTV for all ranges of expected slip values in real service. The knowledge of the maximum possible torque amplitudes $MTVA_{max}$ obtained with the present invention eliminates the need for the definition of a confidence interval from prototype service test measurements for the maximum expected torque with the unknown maximum potential excedance value as it is the case in conventional approaches.

The set up of the set of adhesion characteristics SAC with the individual adhesion characteristics $AC_i$ in the present example is done using the records of torsional vibration events TVE during service operation of a plurality of reference vehicles as it has been described above. As had been explained in the context of Figure 5 and 6, such torsional vibration data TVD lead to specific vibration patterns within the wheel set 105 (see Figure 5) which are a function of the actual slip value S(T) currently prevailing at the wheel to rail contact location. More specifically, the typical build up pattern of the oscillation (with the exponential growth of the amplitude as shown in Figure 5) as well as the limitation of the amplitude of the oscillation (according to the so called Vogel law as shown in Figure 6) allow development of an algorithm for calculating (together with further operating parameters such as the actual drive torque applied to the wheel unit) the actual slip (S) and adhesion factor (AF) pair for the adhesion characteristic $AC_i$ that applies at the time of this specific torsional vibration event TVE.

Such actual slip and adhesion value pairs (S; AF) retrieved from torsional vibration data TVD recorded by the reference vehicles are then used in the present example to approximate the corresponding adhesion characteristics $AC_i$. It will be appreciated that the parameters of the exponential growth of the amplitude of the torsional vibration signal in particular depends on the inclination of the adhesion characteristic $AC_i$ at the respective point of operation, such that this information further simplifies approximation of the adhesion characteristic $AC_i$ and renders it more precise, respectively.

It will be appreciated that the torsional vibration data TVD collected by the reference vehicles in the present example is logically associated to further parameters, such as environmental parameters and operational parameters of the reference vehicle, prevailing at the time of the respective torsional vibration event TVE to allow the setup of a meaningful set SAC of adhesion characteristics $AC_i$ which represent a wide range of finely differentiated operation conditions for the traction unit 103 to be designed.

In the present example, environmental information, such as a weather condition information, an air humidity information, an air temperature information may be logically associated to the torsional vibration data TVD (and, hence, to the associated adhesion characteristic $AC_i$) alone or in arbitrary combination. Similarly, a track condition information and a track location information prevailing upon retrieval of the torsional vibration data TVD may be logically associated to the torsional vibration data TVD (and, hence, to the associated adhesion characteristic $AC_i$) alone or in arbitrary combination. Similarly, a time of retrieval information of the torsional vibration data TVD may be logically associated to the torsional vibration data TVD and, hence, the associated adhesion characteristic $AC_i$.

With the thus obtained knowledge of the probability of torsional vibration events TVE in relation to the geographic position and the respective environmental condition, for example, a load history profile can be generated for the torsional vibration TV.

Furthermore, the continuous collection of the real service torsional vibration data TVD on a large population of vehicles may be used to continuously raise the statistical significance of the torsional vibration data basis and, hence, the accuracy and reliability of the overall process.

Finally, the collection of torsional vibration data TVD and torque values MTV allows checking the usage of the wheel sets 105 in relation to their load history and structural integrity catenation for the certification process done in step 109.11. The service profile of the real vehicle 101 can be monitored and, in case of exceeding given threshold values, the change of the wheel sets 105 or its individual components can be planned during the normal maintenance process.

Instead of prototype testing measurements for the evaluation of the respective torque values MTV as it is necessary in conventional approaches, the data derived from the present process are used without loops. The convergence of the present process is given by the statistical significance of the adhesion data basis used for establishing the adhesion characteristics $AC_i$.

The required tests in the evaluation step 109.7 are therefore limited to the demonstration of the proper function of the system with its controller 108 and the validation of the mechanical characteristics. Hence, in the present example, prototype testing is only done to verify congruence of the mechanical properties, the controlled properties and their combined relevant functions between the real traction unit 103 and its simulation used in the evaluation step 109.7.

Consequently, as outlined above, the present process allows greatly reducing the amount of prototype testing required in the design process. Testing may simply be limited to verify congruence of the simulated properties with the real properties of a prototype. Typically, up to around 1,600 km test runs can be saved using the present process.

The safety demonstration process in step 109.10 starts with a preliminary hazard analysis, which identifies the expected failure modes with the highest or relevant hazard potential. These failure modes will be calculated with detailed models to demonstrate the behaviour of the system under these conditions. This approach allows assessing the hazard that could result out of such a failure.

In the present example, an axial movement in the press fit of the wheel 105.2 on the shaft 105.1 is considered a key risk of any failure in the system. To assess this risk, a preferred embodiment of a method for evaluating a press fit according to the present invention is used in a press fit evaluation step of step 109.10. In this step, the press fit acting between a first press fit section 105.4 of the wheel 105.2 and a second press fit section 105.5 of the shaft 105.1 is evaluated for compliance with a press fit integrity criterion.

To this end, the press fit evaluation step comprises a press fit modeling part, wherein the press fit is modeled by splitting the second press fit section 105.5 into a plurality of press fit segments 105.6 (namely 10 segments 105.6 in the present example) along the direction of wheel set axis 105.3, linking each of the press fit segments 105.6 to an adjacent press fit segment 105.6 in the torsional direction (about axis 105.3) using a first linking characteristic LC1 and in the axial direction using a second linking characteristic LC2, and linking each of the press fit segments 105.6 to an adjacent part of the first press fit section 105.4 of the wheel 105.2 via a frictional third linking characteristic LC3.

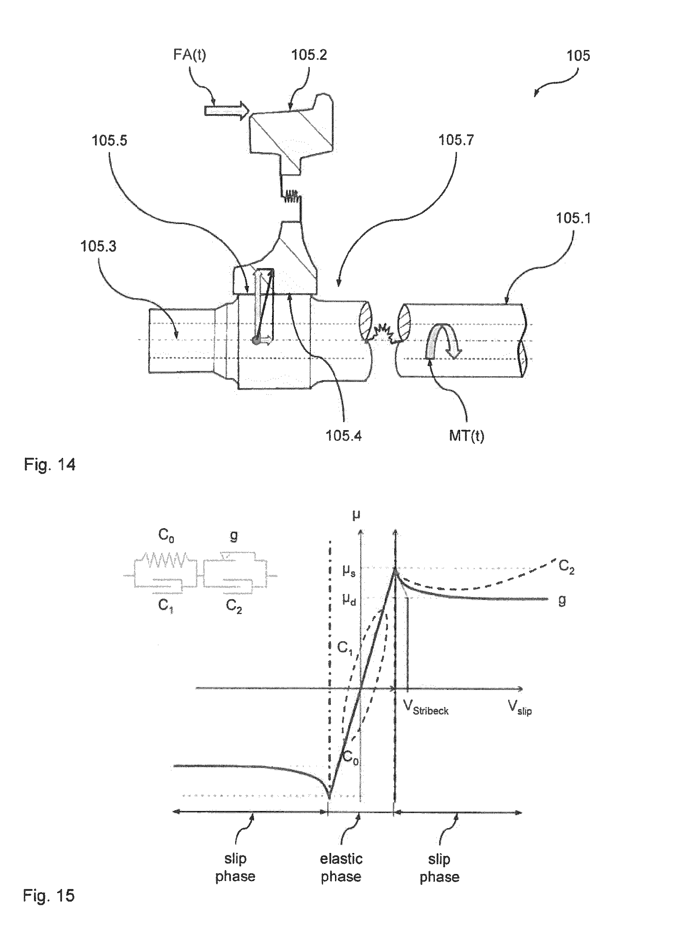

The press fit evaluation step further comprises a press fit simulation part, wherein the modeled press fit is subject to predefined loads to evaluate compliance of the press fit with least one press fit integrity criterion as it is shown in Figure 14.

It will be appreciated that the above press fit model is particularly suited for the evaluation of the properties of the press fit under high dynamic load, i.e., typically, under alternating axial and/or circumferential loads acting on the press fit. The above press fit model, nonetheless due to the (comparatively coarse) segmentation of the shaft part 105.5 and its frictional third linking characteristic LC3 to the wheel 105.2 allows determining the onset of circumferential micromotion at the torque introduction side 105.7 of the shaft part 105.5 as well as the axial shift motion under combined axial and torsional load. In particular, the model allows determining the threshold torque which initiates such frictional micromotion.

The knowledge of these values is important for the dimensioning of the mechanical components participating in the press fit (i.e. typically the mating sections of the wheel 105.2 and the shaft 105.1) and the structural integrity proof of the entire traction unit, in particular, the combination of the mechanical system and the relevant controller part of controller 108.

In the past, such an evaluation of the press fit by prototype testing was economically virtually impossible due to the complexity of the system and the almost inevitable errors introduced by any measurement system. Hence, typically, rather conservative assumptions were made for the press fit integrity evaluation, which greatly increased the requirements and expense for such a press fit. Contrary to that, the above press fit model now allows obtaining more realistic results suited to the real mechanical conditions.

In the present example, the first linking characteristic LC1 is a spring and damper connection characteristic, while the second linking characteristic LC2 is a rigid connection characteristic. The third linking characteristic LC3 is a Lund-Grenoble friction model characteristic, i.e. a characteristic modeling a stick-slip behavior between two bodies as it is shown in Figure 15.

As can be seen from Figure 15, the Lund-Grenoble friction model characteristic LC3 has an elastic phase, with a linear stiffness $C_0$ superimposed by a viscous damping component $C_1$. After exceeding the static friction coefficient $\mu_s$ there is slip phase with a friction coefficient g having a logarithmic decrease with the slip velocity $V_{slip}$. The friction coefficient g asymptotically approaches the dynamic friction coefficient $\mu_d$ with increasing slip velocity $V_{slip}$. In parallel there is a Coulomb damping component $C_2$ which increases with the slip velocity $V_{slip}$.

It will be further appreciated that the comparatively coarse and macroscopic (compared to known finite element methods) axial segmentation of the shaft part 105.5 allows keeping the computational effort low while providing proper press fit behavior assessment.

In the present example, in the press fit simulation part, the modeled press fit is subject to a predefined quasi static load collective and to a predefined dynamic load collective. More precisely, in the press fit simulation part, the modeled press fit is subject to axial loads FA(t) acting along the axis 105.3 as well as to torsional loads MT(t) acting along the torsional direction (i.e. about axis 105.3), both in a quasi static manner and in a predefined dynamic manner. The torsional load MT(t) comprises a torsional vibration component representative of a torsional vibration TV as it has been described above. In the present example, the torsional load MT(t) has a frequency of 40 Hz to 90 Hz to cover the bandwidth of typical torsional vibration TV.

As mentioned above, with the press fit model, the onset of circumferential micro-motion at the torque introduction side 105.7 of the shaft part 105.5 as well as the axial shift motion under combined axial and torsional load is determined. Moreover, the press fit model allows determining the threshold torque which initiates such frictional micro-motion. The results of the press fit simulation part simulation part are then checked against the predefined press fit integrity criterion to evaluate press fit safety. Obviously, in case of finding noncompliance with the press fit integrity criterion, an appropriate modification to the system design will be made.

The present invention, in the foregoing, has only been described by way of an example for a vehicle under traction conditions. However, the same process can be applied as well for systems under braking condition. As the adhesion factor AF is generally below 0.15 under braking conditions, the frequency of torsional vibration events TVE is significantly lower than under traction at higher adhesion factor levels. As the slip S however is generally higher under braking conditions, the torques MTV generated under braking conditions can easily be higher than under traction conditions. Despite the higher torque values MTV, the lower frequency leads to a generally lower criticality of torsional vibration events TVE under braking conditions.

**Claims**

1. A method for designing a traction unit for a rail vehicle, said traction unit (103, 108) comprising at least one wheel unit (105) connected to a drive unit (107) driving said at least one wheel unit (105), said method comprising,

  - in a press fit evaluation step, evaluating a press fit acting between a wheel and a shaft (105.1) of said wheel unit (105) for compliance with at least one press fit integrity criterion,
  - said press fit acting between a first press fit section (105.4) of said wheel (105.2) and a second press fit section (105.5) of said shaft (105.1);
  - an axis of rotation of said shaft (105.1) defining an axial direction of said wheel unit (105) and a torsional direction about said axis of rotation;
  **characterized in that**
  - said press fit evaluation step comprises a press fit modeling part, wherein said press fit is modeled by splitting said second press fit section (105.5) into a plurality of press fit segments (105.6) along said axial direction, linking each of said press fit segments (105.6) to an adjacent press fit segment (105.6) in said torsional direction using a first linking characteristic and in said axial direction using a second linking characteristic, and linking each of said press fit segments (105.6) to an adjacent part of said first press fit section (105.4) of said wheel (105.2) via at least one frictional third linking characteristic; and
  - said press fit evaluation step comprises a press fit simulation part, wherein said modeled press fit is subject to at least one predefined load to evaluate compliance of said press fit with said at least one press fit integrity criterion.

2. The method according to claim 1, wherein

  - said first linking characteristic is a spring and damper connection characteristic; and/or
  - said second linking characteristic is a spring and damper connection characteristic or a rigid connection characteristic;

and/or

- said third linking characteristic is a Lund-Grenoble friction model characteristic; and/or
- said plurality of press fit segments (105.6) is formed by 5 to 20 press fit segments (105.6), preferably 8 to 15 press fit segments (105.6), more preferably 10 to 12 press fit segments (105.6).

**3.** The method according to claim 1 or 2, wherein,

- in said press fit simulation part, said modeled press fit is subject to at least one predefined quasi static load, in particular, to a predefined quasi static load collective, and/or to at least one dynamic load, in particular to a predefined dynamic load collective;
and/or
- in said press fit simulation part, said modeled press fit is subject to at least one axial load acting along said axial direction;
and/or
- in said press fit simulation part, said modeled press fit is subject to at least one torsional load acting along said torsional direction; said torsional load, in particular, comprising a torsional vibration component representative of a torsional vibration between two wheels (105.2) of said wheel unit (105) about said axis of rotation; said torsional load, in particular, having a frequency of 25 Hz to 150 Hz, preferably 30 Hz to 120 Hz, more preferably 35 Hz to 95 Hz.

**4.** The method according to any one of claims 1 to 3, wherein,

- said traction unit further comprises a controller unit (108) controlling said drive unit (107), and wherein,
- in a mechanical design step (109.2), at least one mechanical design parameter of said traction unit (103, 108) is defined as a function of at least one predefined performance parameter of said rail vehicle (101),
- in a controller design step (109.3), at least one controller design parameter of said traction unit (103, 108) is defined as a function of at least one predefined performance parameter of said rail vehicle (101) and/or as a function of at least one mechanical design parameter of said traction unit (103, 108), and,
- in an evaluation step (109.7), at least one load value acting on said traction unit (103, 108) incorporating said at least one mechanical design parameter defined in said mechanical design step (109.2) and incorporating said at least one controller design parameter defined in said controller design step (109.3) is defined, and compliance of said traction unit (103, 108) with at least one structural integrity criterion predefined for said rail vehicle (101) is evaluated; wherein
- said at least one load value is defined using a set of real operation adhesion characteristics, each of said real operation adhesion characteristics being representative of real operation slip dependent wheel to rail adhesion and having been previously obtained from real operation data, in particular, real service operation data, of at least one reference rail vehicle

**5.** The method according to claim 4, wherein

- at least one of said real operation adhesion characteristics has been obtained using torsional vibration data as said real operation data, said torsional vibration data having been collected on said at least one reference rail vehicle and being representative of undesired mutual torsional vibration of two wheels of a reference wheel unit of said reference rail vehicle about an axis of rotation of said reference wheel unit;
and/or
- at least one environmental information, in particular, a weather condition information and/or an air humidity information and/or an air temperature information, and/or to at least one track condition information and/or to at least one track location information representative of a condition prevailing upon retrieval of said real operation data and/or a time of retrieval information of said real operation data is logically associated to at least one of said real operation adhesion characteristics;
wherein
- said real operation data, in particular, have been retrieved using at least one sensor unit of said reference vehicle and/or a drive unit driving said reference wheel unit and/or a control unit of a drive unit driving said reference wheel unit;
- at least one of said real operation adhesion characteristics, in particular, has been established using torsional vibration data from a plurality of torsional vibration events having occurred in said at least one reference vehicle, in particular, having occurred in a plurality of reference vehicles, said torsional vibration data, in particular, having been statistically processed to establish said at least one real operation adhesion characteristic;

- at least one of said real operation adhesion characteristics, in particular, has been established using a significant fraction of torsional vibration data from a plurality of torsional vibration events having occurred in said at least one reference vehicle, said significant fraction being a fraction of said torsional vibration data collected prior to the onset of an action of a reference vehicle controller counteracting said torsional vibration event.

- said torsional vibration data, in particular, including information representative of a torque prevailing within said reference wheel unit about said axis of rotation, said real operation characteristic being established using a known relation between said torque and a slip value prevailing at a contact point between one of said wheels of said reference wheel unit and a rail of a track negotiated by said reference vehicle

6. The method according to claim 4 or 5, wherein,

- in a simulation part of said evaluation step (109.7), a predefined worst-case scenario for said vehicle is used to establish a maximum representative slip and/or a representative slip collective to be expected at said wheel unit (105) during operation of said rail vehicle (101), said service profile being representative of service requirements to be fulfilled by said vehicle over its operational lifetime;
- said maximum representative slip, in particular, being used to calculate a maximum torque to be expected at said wheel unit (105) about an axis of rotation of said wheel unit (105) during operation of said rail vehicle (101), said maximum torque, in particular, being used to evaluate compliance of a press fit between a wheel (105.2) and a shaft (105.1) of said wheel unit (105) with a predetermined integrity requirement, in particular, with a press fit integrity requirement of said press fit and/or to evaluate compliance of said shaft (105.1) with a predetermined integrity requirement;
- said representative slip collective, in particular, being used to calculate a load collective to be expected at said wheel unit (105) during operation of said rail vehicle (101), said load collective, in particular, being used to evaluate, in a integrity requirement part of said evaluation step (109.7), compliance of a wheel unit component of said wheel unit (105), in particular, a wheel unit shaft (105.1) connecting said wheels (105.2), with a predetermined integrity requirement, in particular, a required lifetime requirement of said wheel unit component; and,
- in case of finding noncompliance of said wheel unit component with said predetermined integrity requirement, in particular, modifying at least one mechanical design parameter and/or at least one controller design parameter of said traction unit (103, 108) as a function of a result of said integrity requirement part of said evaluation step (109.7).

7. The method according to claim 6, wherein

- said maximum representative slip and/or said representative slip collective is established using said set of adhesion characteristics;
and/or
- said maximum representative slip and/or said representative slip collective is established using at least one adhesion scenario, said adhesion scenario being representative of a typical course of said wheel to rail adhesion to be expected under a typical worst-case operating scenario of said vehicle;
wherein
- said at least one adhesion scenario, in particular, comprises a sudden adhesion drop scenario simulating a steep drop in said wheel to rail adhesion from a maximum adhesion level;
- said at least one adhesion scenario, in particular, comprises a sudden adhesion rise scenario simulating a steep rise in said wheel to rail adhesion up to a maximum adhesion level;
- said at least one adhesion scenario, in particular, comprises an adhesion dent scenario simulating a steep drop in said wheel to rail adhesion from a maximum adhesion level followed by a steep rise in said wheel to rail adhesion up to said maximum adhesion level, said adhesion drop, in particular, occurring within an adhesion drop time and said adhesion rise, in particular, following after a low adhesion delay, said low adhesion delay being 50% to 500%, preferably 50% to 400%, more preferably 90% to 300%, of said adhesion drop time;
- said at least one adhesion scenario, in particular, comprises a low adhesion scenario simulating a persistent low wheel to rail adhesion at a low adhesion level, said low adhesion level being 20% to 70%, preferably 30% to 60%, more preferably 40% to 60%, of a maximum adhesion level;
- said maximum adhesion level, in particular, being representative of operation on a dry level track;
- said at least one adhesion scenario, in particular, being selected from of an adhesion scenario set as a function of said predefined service profile.

8. The method according any one of claims 3 to 7, wherein

- in a testing part of said evaluation step (109.7), at least one test is performed with at least one prototype component of said traction unit (103, 108) to verify congruence of at least one real property and/or at least one real function of said at least one prototype component with a corresponding simulated property or function of a simulation model of said at least one prototype component used in a simulation part of said evaluation step (109.7);
- said real property, in particular, being a real mechanical design parameter of said at least one prototype component corresponding to said at least one mechanical design parameter defined in said mechanical design step (109.2);
- said real property, in particular, being a real control design parameter of said at least one prototype component corresponding to said at least one control design parameter defined in said control design step;
- said real property, in particular, being a real function of said at least one prototype component of said controlled unit (108) and/or said drive unit (107) and/or said wheel unit (105).

9. The method according to any one of claims 3 to 8, wherein

- in said mechanical design step (109.2), after defining said at least one mechanical design parameter, in particular, after defining a geometry and a material of a wheel unit shaft (105.1) of said wheel unit (105) and a press fit of at least one of said wheels (105.2) on said wheel unit shaft (105.1), a maximum allowable slip value at a contact point between one of said wheels (105.2) of said wheel unit (105) and a rail of a track negotiated by said vehicle is calculated using said at least one mechanical design parameter;
- in a basic controlled setup part (109.4) of said controller design step (109.3), a basic controller setup is defined as a function of said at least one mechanical design parameter defined in said mechanical design step (109.2);
- in a criticality assessment step (109.5) of said controller design step (109.3), using said maximum allowable slip value and said basic controller setup, a usage factor for at least one component of said traction unit (103, 108), in particular, a usage factor for said wheel unit shaft (105.1) and/or a usage factor for said press fit, is calculated, and a criticality risk evaluation is performed as a function of said usage factor for said at least one component, and
- a modification in said at least one mechanical design parameter and/or in said at least one controller design parameter is made as a function of a result of said criticality risk evaluation.

10. The method according to any one of claims 3 to 9, wherein

- in said basic controller setup part (109.4), said basic controller setup is made as a function of said at least one mechanical design parameter, said basic controller setup being either a low slip controller setup or a high slip controller setup;
- said basic controller setup, in particular, being made as a function of a location of a torque transmission from said drive unit (107) to said wheel unit (105), said low slip controller setup, in particular, being selected if said location of torque transmission is substantially central between said wheels (105.2);
and/or
- said basic controller setup, in particular, being made as a function of a maximum level of said wheel to rail adhesion required for operation of said vehicles, said low slip controller setup, in particular, being selected if said maximum level of said wheel to rail adhesion factor is below 0.15 to 0.30, preferably below 0.15 to 0.35, more preferably below 0.15 to 0.20;
and/or
- said basic controller setup, in particular, being made as a function of a traction ratio of traction units of said vehicle with respect to a total number of running gear units of said vehicles, said low slip controller setup, in particular, being selected if said traction ratio is greater than 0.20 to 0.60, preferably greater than 0.25 to 0.55, more preferably greater than 0.30 to 0.50;
and/or
- said basic controller setup, in particular, being made as a function of braking concept of said traction unit (103, 108), said low slip controller setup, in particular, being selected if said braking concept comprises braking means engaging a tread of said wheels (105.2) or a wheel contact surface of a rail of said track negotiated by said vehicle; wherein,
- in said low slip controller setup, said controlled unit (108) is configured to operate in a positive adhesion gradient area of a wheel to rail adhesion characteristic prevailing at said wheel unit (105), and, in said high slip controller setup, said controlled unit (108) is configured to operate in a negative adhesion gradient area of a wheel to rail adhesion characteristic prevailing at said wheel unit (105).

**11.** The method according to claim 10, wherein,

- in said controlled design step (109-3), said controller unit (108) is configured to detect torsional vibration events at said wheel unit (105) and/or to log torsional vibration events at said wheel unit (105); wherein

- in said mechanical design step (109.2), after defining said at least one mechanical design parameter, in particular, after defining a geometry and a material of a wheel unit shaft (105.1) of said wheel unit (105) and a press fit of at least one of said wheels (105.2) on said wheel unit shaft (105.1), a maximum allowable slip value at a contact point between one of said wheels (105.2) of said wheel unit (105) and a rail of a track negotiated by said vehicle is calculated using said at least one mechanical design parameter; and,

- in said controller design step (109.3), said controller unit (108), in said high slip controller setup, is configured to counteract torsional vibration events at said wheel unit (105) implementing a hard intervention regime immediately counteracting torsional vibration events and/or is configured to implement a slip growth limitation;

- in said controller design step (109.3), said controller unit (108), in said low slip controller setup, is configured to counteract torsional vibration events at said wheel unit (105), said controller unit (108) implementing a hard intervention regime immediately counteracting torsional vibration events if said maximum allowable slip value is below a critical torsional vibration threshold and said controller unit (108) implementing a soft intervention regime slowly counteracting torsional vibration events if said maximum allowable slip value is in a soft intervention range above said critical torsional vibration threshold and/or said controller unit (108) is configured to implement a slip growth limitation;

- said critical torsional vibration threshold being a slip value of 0.25 m/s to 0.30 m/s, preferably of 0.26 m/s to 0.29 m/s, more preferably of 0.27 m/s to 0.28 m/s;

- said soft intervention range ranging from said critical torsional vibration threshold to a slip value of up to 1.6 m/s, preferably up to 1.5 m/s, more preferably up to 1.4 m/s.

**12.** The method according any one of claims 3 to 11, wherein,

- in case of determining noncompliance of said traction unit (103, 108) with said at least one structural integrity criterion in said evaluation step (109.7), said mechanical design step (109.2) and/or said controlled design step (109.3) is repeated followed by repetition of said evaluation step (109.7);
and/or

- in case of determining compliance of said traction unit (103, 108) with said at least one structural integrity criterion in said evaluation step (109.7), generating maintenance and/or service requirements for said traction unit (103, 108);
and/or

- in case of determining compliance of said traction unit (103, 108) with said at least one structural integrity criterion in said evaluation step (109.7), performing, in a safety demonstration step, at least one hazard analysis for at least one component of said traction unit (103, 108), said at least one hazard analysis identifying at least one maximum hazard failure mode among a plurality of potential failure modes of said at least one component of said traction unit (103, 108) having a maximum hazard level, and simulating a behavior of said at least one component of said traction unit (103, 108) under said maximum hazard failure mode to obtain a hazard risk level, in particular, a security integrity level (SIL), of said at least one component of said traction unit (103, 108), said maximum hazard failure mode, in particular, being an axial shift of one of said wheels (105.2) on a wheel set shaft (105.1) of said wheel unit (105).

**13.** A traction unit comprising at least one wheel unit (105) connected to a drive unit (107) driving said at least one wheel unit (105) and a controlled unit (108) controlling said drive unit (107), said traction unit (103, 108) having been designed using a method according any one of claims 1 to 14.

101

102

104.2
104
104.1

z
y      x

T          103          105   106      103   105

Fig. 1

108        106        107.1        107        103

104.1

105.2        105.2

105.3        105

FT        FT

TR        TR

105.1        107.2

z
x        y

Fig. 2

Fig. 3

Fig. 4

Fig. 5

Fig. 6

109.1 → START

109.2 → Mechanical design

109.4 → Basic controller design

109.5 → Criticality OK?  N / Y

109.3

110

109.6 → Modification of mechanical and/or controller parameters

109.8 → Calculation expected maximum load and load collective

109.9 → Integrity level OK?  N / Y

109.7

109.10 → Generation of service and maintenance documentation; validation process definition; safety case documentation

109.11 → Preparation for Certification

109.12 → STOP

Fig. 7

Fig. 8

Fig. 9

Fig. 10

Fig. 11

Fig. 12

Fig. 13

FA(t)  105.2  105

105.5

105.7

105.3

105.1

105.4  MT(t)

Fig. 14

$C_0$  g

$\mu$

$\mu_s$

$\mu_d$

$C_1$

$C_2$

$C_1$

$C_2$

$C_0$

g

$V_{Stribeck}$  $V_{slip}$

slip phase    elastic phase    slip phase

Fig. 15

Europäisches
Patentamt
European
Patent Office
Office européen
des brevets

# EUROPEAN SEARCH REPORT

Application Number

EP 14 15 6805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 189 456 B1 (SMITH STEPHEN W [US] ET AL) 20 February 2001 (2001-02-20) | 13 | INV. B60B37/00 |
| A | * the whole document * | 1-12 | B61F3/00 |
| A | US 5 684 713 A (ASADA HARUHIKO [US] ET AL) 4 November 1997 (1997-11-04) * the whole document * | 1-13 | |
| A | WO 2004/109559 A2 (DAIMLER CHRYSLER AG [DE]; AGEORGES CHRISTOPHE [DE]; JOST REINER [DE];) 16 December 2004 (2004-12-16) * the whole document * | 1-13 | |

TECHNICAL FIELDS
SEARCHED        (IPC)

B60B
B61F

The present search report has been drawn up for all claims

| Place of search | Date of completion of the search | Examiner |
|---|---|---|
| Munich | 30 July 2014 | Awad, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 15 6805

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2014

| Patent document cited in search report | | Publication date | Patent family member(s) | | Publication date |
|---|---|---|---|---|---|
| US 6189456 | B1 | 20-02-2001 | NONE | | |
| US 5684713 | A | 04-11-1997 | NONE | | |
| WO 2004109559 | A2 | 16-12-2004 | DE | 10326229 A1 | 30-12-2004 |
| | | | WO | 2004109559 A2 | 16-12-2004 |

EPO FORM P0459

For more details about this annex : see Official Journal of the European Patent Office, No. 12/82